# FASCICULE DE BREVET EUROPEEN

(11) **EP 3 915 097 B1**
(45) Date de publication et mention de la délivrance du brevet: **12.07.2023**
(21) Numéro de dépôt: 20702917.4
(22) Date de dépôt: 20.01.2020
(51) Int. Cl.: G07F 17/42, G06Q 20/04, G07F 11/04, G07F 17/32, G07C 15/00, G07F 11/00, G07F 11/16

(54) **METHODE, MODULE ET APPAREIL POUR LA DISTRIBUTION DE BILLETS DE LOTERIE**
VERFAHREN, MODUL UND AUSRÜSTUNG FÜR DIE VERTEILUNG VON LOTTERIEKNÜPPEL
METHOD, MODULE AND APPARATUS FOR DISPENSING LOTTERY TICKETS

(30) Priorité: 21.01.2019 CH 662019
(43) Date de publication de la demande: 01.12.2021
(73) Titulaire: Sadamel SA, 2300 La Chaux-de-Fonds (CH)
(72) Inventeur: CLAUDE, Fabien, 2300 La Chaux-de-Fonds (CH); SOMMER, Fabian, 2300 La Chaux-de-Fonds (CH)
(74) Mandataire: P&TS SA (AG, Ltd.)
(86) Numéro de dépôt international: PCT/IB2020/050402
(87) Numéro de publication internationale: WO 2020/152560

(56) Documents cités:
- EP-A1- 3 261 068
- WO-A1-2017/013530
- FR-A1- 2 760 443
- FR-A1- 2 860 903
- US-A- 4 140 259
- US-A- 5 927 513
- US-A- 5 927 583
- US-A1- 2006 071 046
- US-A1- 2011 071 666
- US-A1- 2018 186 558

## Description

### Domaine technique

La présente invention concerne une méthode, un module et un appareil pour la distribution de billets, notamment de billets de jeu de hasard et d'argent, tels que des billets de loterie instantanée.

### Etat de la technique

Les jeux de hasard et d'argent, notamment les loteries, sont des pratiques commerciales anciennes et pratiquées communément dans plusieurs pays du monde.

Afin de faire face à la demande de ces jeux, des machines de vente en libre-service offrant une sélection parmi différents jeux ont été proposés dans des lieux publics, notamment des billets de loteries instantanées.

Par exemple, le document FR2860903 décrit un dispositif de délivrance de tickets de loterie en découpant un nombre sélectionné de tickets conditionnés en bande. WO 2017/013530 A1 décrit également un système de distribution de tickets de loterie conditionné en bande. US4140259 A divulgue un distributeur automatique qui fournit un ticket avec chaque objet distribué. Ces documents sont utiles pour comprendre l'arrière-plan technique de la présente invention

Cependant, la taille de ces dispositifs de distribution est fortement influencée par le nombre de jeux proposés, ce qui demande aux exploitants de mettre à disposition des espaces importants dans leurs locaux afin de proposer une sélection de jeux jugée satisfaisante par les utilisateurs.

Le placement de ces dispositifs de distribution de grande taille dans des lieux où l'espace est limité, tels que les bars, les restaurants, les stations-service et les kiosques est donc difficile, le plus souvent impossible.

### Bref résumé de l'invention

Le but de la présente invention est de proposer un dispositif pour la distribution de billets plus compact que les appareils de distribution connus.

Selon l'invention, ces buts sont atteints notamment au moyen du module de la revendication 1, de l'appareil de distribution de la revendication 10, et la méthode de distribution de la revendication 12. Les revendications dépendantes décrivent des modes de réalisation particulièrement avantageux.

Une réduction significative de l'encombrement radiale du dispositif est obtenue par une séparation du billet du carnet par une action conjointe du dispositif de réception du robot mobile et du mécanisme de distribution de la cassette accouplée. En particulier, cette action conjointe comprend le positionnement relatif de la portion terminale du carnet par rapport au dispositif de séparation de sorte à séparer le billet selon une ligne de séparation prédéterminée, notamment correspondant à l'une des lignes de prédécoupe délimitant les billets. Alternativement ou complémentairement, cette action conjointe comprend la mise en tension de la bande (notamment de la portion terminale du carnet) lors de la séparation du billet selon cette ligne de séparation prédéterminée.

Dans un mode de réalisation, le robot mobile comprend un mécanisme de maintien et de transport du billet pour collecter le billet séparé et le transporter vers un dispositif de distribution, le billet étant positionné substantiellement parallèle à l'axe d'empilement des cassettes.

Ce mode de réalisation permet d'offrir la distribution de billets de tailles différentes, notamment de billets d'une longueur dépassant les 20 cm, ou comprise entre 20 et 30 cm, telle qu'environ 25, 26, 27 ou 28 cm, tout en limitant l'encombrement de l'appareil de distribution. Ce mode de réalisation permet en plus de contrer le vol de billets car le dispositif de distribution peut être muni d'un lecteur permettant d'identifier chaque billet individuel et d'activer et/ou d'enregistrer chaque billet individuel sur un serveur central avant sa distribution et/ou d'identifier les carnets de billets installés et d'assurer ainsi leur traçabilité.

Dans un mode de réalisation, la cassette comprend un rehausseur pour surélever l'extrémité du carnet orienté en opposition au mécanisme de distribution de la cassette, notamment des rouleaux d'entrainement.

Ce mode de réalisation permet d'incurver, voire d'incliner, le carnet de sorte à permettre son correct dépliage dans un espace réduit.

Dans un mode de réalisation, la séparation d'un billet est précédée par le pliage de la portion terminale du carnet à l'emplacement de la ligne de séparation, notamment de la ligne de prédécoupe, délimitant le billet à séparer.

Ce mode de réalisation permet de fragiliser la portion du carnet en correspondance de la ligne de séparation, notamment de la ligne de prédécoupe, et d'obtenir une séparation plus précise et nette du billet.

Les solutions proposées présentent l'avantage par rapport à l'art antérieur d'offrir un nombre plus élevé de jeux tout en limitant l'encombrement du dispositif de distribution. Ceci permet le placement du dispositif dans des lieux publics ou l'espace est limité, tout en satisfaisant les utilisateurs potentiels avec une sélection de jeux plus large.

### Brève description des figures

Des exemples de mise en oeuvre de l'invention sont indiqués dans la description illustrée par les figures suivantes :
- Fig 1 : Module pour appareil de distribution de billets pré-imprimées et conditionnées en bandes, selon l'invention ;
- Fig 2 : Détail d'une des cassettes du module de la figure 1 ;
- Fig 3 : Robot du module de la figure 1 ;
- Fig 4 et 5 : Accouplement ente le robot et une des cassettes du module de distribution ;
- Fig 6a-6d : Etapes de séparation d'un billet conditionné en bande par le module de distribution ;
- Fig 7 : Mécanisme de maintien et de transport du billet équipant le robot mobile ;
- Fig 8 et 9 : Détails du dispositif de distribution des billets du module ;
- Fig 10 : Détail d'une des cassettes du module de la figue 1 selon un autre mode de réalisation ;
- Fig 11 et 12: Détails du dispositif de distribution des billets du module selon un autre mode de réalisation ;
- Fig 13 : Module selon un autre mode de réalisation de l'invention.

### Exemple(s) de mode de réalisation de l'invention

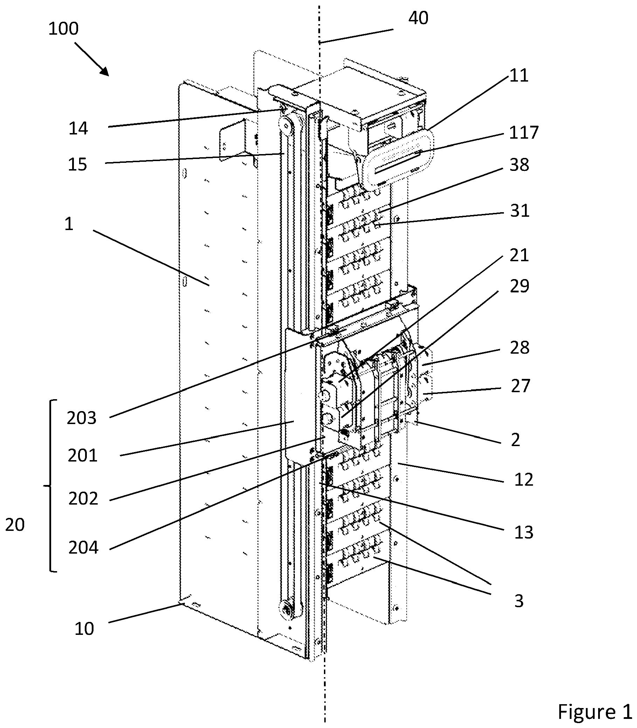

La figure 1 illustre un exemple d'un module 100 pour un appareil pour la distribution de billets, notamment de billets pré-imprimés et conditionnés en carnets.

Le module 100 comprend un châssis 1 configuré pour retenir, une pluralité de cassettes 3 amovibles, préférablement les cassettes étant superposées l'une à l'autre le long d'un axe d'empilement 40.

Bien que le module 100 de la figure 1 comprenne 12 cassettes 3 de sorte à pouvoir offrir en vente jusqu'à 12 (différentes) typologies de billets, le module 100 peut être configuré pour retenir un autre nombre de cassettes, tels que 8, 10 ou 16 cassettes.

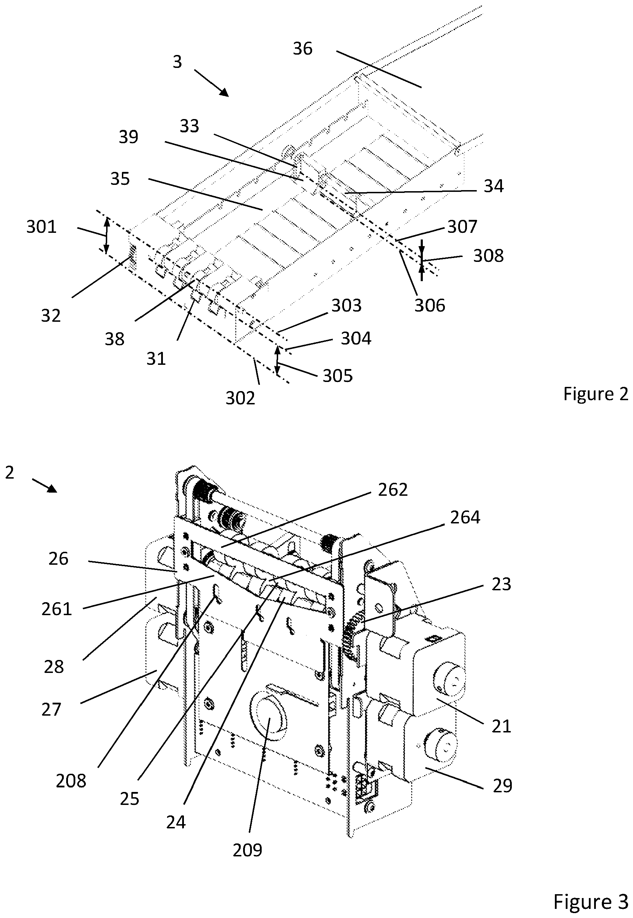

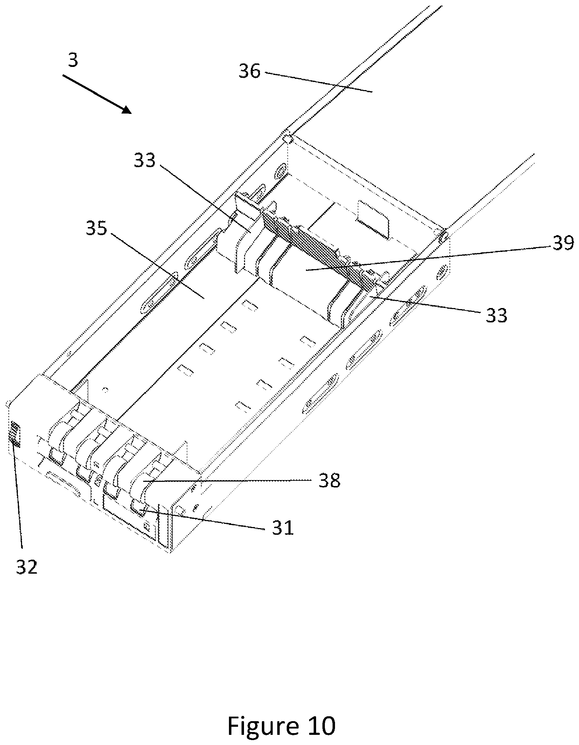

Comme illustré par la figure 2, chaque cassette 3 est configurée pour recevoir et retenir un carnet de billets, qui peut être d'une typologie différente des autres carnets (p.ex. étant relative à un autre jeu de loterie instantanée). La figure 10 montre une cassette 3 selon un autre mode de réalisation de la présente invention.

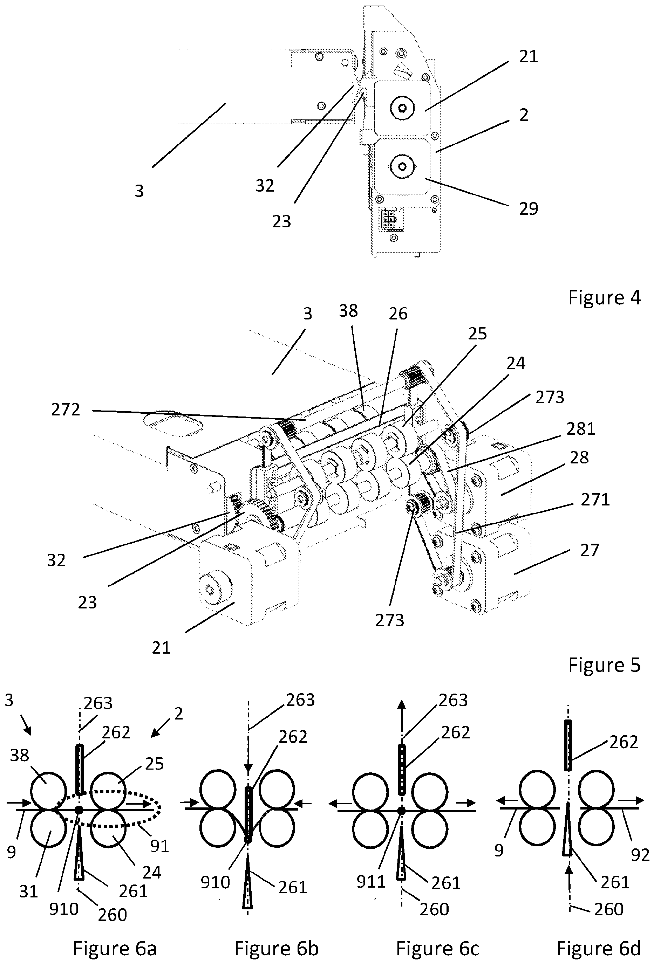

La cassette 3 comprend un logement 35 (Fig 2, 10) pour loger un carnet 9 (Fig 6a-6b) de billets. Par carnet de billets on entend une bande continue de billets pliée en pages, de sorte que les billets sont conditionnés en paravent (un tel conditionnement est également appelé en accordéon ou en leporello). Chaque page du carnet peut comprendre un ou plusieurs billets, entièrement ou partiellement pré-imprimé.

Les billets du carnet sont délimités par des lignes de séparations. Une ligne de séparation peut être démarquée par une ou plusieurs signes graphiques ou typographiques, telles qu'une ligne ou un alignement de symboles. De préférence, alternativement ou complémentairement, la ligne de séparation peut comprendre (ou être constitué de) une ligne de prédécoupe 910, constituée d'un alignement de trous passants et/ou de tenons.

Chaque cassette 3 est pourvue d'un mécanisme de distribution 31, 32, 38 permettant, lorsque actionnée, une extraction d'une portion terminale 91 du carnet 9 depuis la cassette. Le mécanisme de distribution illustré par les figures 2 et 10 comprend un ou plusieurs rouleaux d'entrainement 31, et contre-rouleaux 38 configurés pour entraîner en déplacement le carnet lorsqu'il est engagé entre le ou les rouleaux et contres rouleaux. Le ou les rouleaux d'entrainement 31 sont entraînés en rotation par une roue dentée 32 d'entrainement actionnable par l'extérieure de la cassette. Les contre-rouleaux sont libres en rotation et assurent le maintien de la bande de billets (carnet) par pression.

Avantageusement, la cassette est configurée pour recevoir divers typologies de carnet, c'est-à-dire des carnets ayant des pages de longueurs et/ou de largeurs différentes.

La cassette 3 peut être ainsi équipée d'un premier guide de réglage 33 délimitant la largeur du logement de la cassette. Ce guide est déplaçable de sorte à limiter le déplacement du carnet un fois logé dans la cassette. Selon un mode de réalisation préféré, la cassette 3 comporte 2 guides de réglage 33, parallèles l'un à l'autre, et permettant de délimiter la largeur utile du logement de la cassette, adaptée aux dimensions du carnet. Les deux guides 33 permettent en outre de centrer le carnet 9 dans la cassette 3 et de le positionner face au mécanisme de distribution 31, 32, 38.

Alternativement ou complémentairement, la cassette 3 peut être équipée d'un deuxième guide 34 délimitant la longueur du logement de la cassette. Ce deuxième guide 34 peut être déplaçable de sorte à maintenir le carnet 9 logé dans la cassette lors de son extraction par le mécanisme de distribution 31, 32, 38.

La cassette 3 peut être équipée d'un couvercle 36, préférablement pivotant, offrant une protection du carnet 9 lors de son extraction de la cassette par le mécanisme de distribution 31, 32, 38. En particulier, le couvercle 36 est configuré pour réduire la friction avec le carnet 9 en extraction afin de garantir l'intégrité des billets, notamment en cas de billets pourvus d'une surface à gratter. Alternativement ou complémentairement, le couvercle 36 peut être configuré pour offrir une protection au carnet 9 contre la poussière, l'humidité et/ou autre agent atmosphérique.

Avantageusement, la cassette 3 peut être équipée d'un rehausseur 39 configuré pour surélever un coté du carnet de billets, lorsqu'il est logé dans le logement 35, de sorte à incurver, voir incliner, le carnet pour permettre son correct dépliage dans un logement moins haut.

En particulier, le rehausseur 39 est configuré pour surélever l'arrière du carnet 9, c'est-à-dire le coté du carnet le plus éloigné du mécanisme de distribution de la cassette, notamment des rouleaux 31, 38, de sorte à incurver ce côté du carnet 9 (voir incliner l'ensemble du carnet, ceci en dépendance de la rigidité du carnet) ce qui augmente l'angle de dépliage, c'est-à-dire l'angle entre la portion du carnet dépliée et la dernière page non-dépliée du carnet.

Le rehausser 39 permet ainsi de baisser la position 304 où le carnet est extrait de la cassette par des rouleaux 31, 38 d'entrainement (qui est formé par l'intersection des paires des rouleaux) par rapport à la position de la page supérieure du carnet 9 lorsqu'il est logé dans la cassette 3. Ceci permet de rapprocher le bord supérieur 303 de la cassette 3 du bord inférieur 302, ce qui réduit la hauteur 301 de la cassette 3. Une réduction de la hauteur de chaque cassette 3 du module 100 conduit à une réduction de l'encombrement (verticale) découlant de la pile de cassettes superposées.

Le rehausseur 39 peut prendre une forme d'une surface surélevée et/ou inclinée (telle qu'une surface d'une cale 39, d'un tasseau ou d'une tige) permettant de retenir le côté du carnet à une position surélevé 307 par rapport à la surface 306 du logement 35. Le rehaussement 308 (c'est-à-dire la distance entre la surface 306 du logement 35 et la surface 307 du rehausseur) fourni par le rehausseur 39 est typiquement d'au moins 5 mm, et se situe de préférence entre 1 cm et le tiers, voire la moitié de la hauteur 301 de la cassette.

Comme illustré par la figure 1 et les figures 3-5, le module 100 comprend un robot 2 mobile par rapport au châssis 1 et configuré pour s'accoupler sélectivement avec l'une des cassettes 3 du module 100, afin de permettre une séparation d'un billet 92 depuis le carnet 9 de billets logé dans la cassette sélectionnée.

Par robot on entend une structure déplaçable par rapport au châssis selon un système de coordonnées, de préférence selon un système de coordonnées cartésiennes. Le système de coordonnées peut être à une dimension (1D), notamment en cas de cassette alignée. Le système de coordonnées peut être à 2 ou 3 dimensions (2D, 3D), notamment en cas de cassettes en matrice ou de cassettes rangées en plusieurs alignements.

La séparation du billet 92 est effectuée par un dispositif de séparation 26, 261 équipant le module 100, le dispositif de séparation étant configuré pour opérer une séparation le long d'un plan de séparation 260 (cf. figure 6d). Le module 100 peut comprendre une pluralité de dispositifs de séparation, chacun étant solidaire de chaque cassette 3. Avantageusement, le module 100 peut comprendre un dispositif de séparation solidaire du robot 2, comme illustré dans la figure 5.

Le dispositif de séparation peut comprendre une ou plusieurs lames de séparation. Le dispositif de séparation peut comprendre une ou plusieurs contre-lames coopérant avec la ou les lames de séparation.

Comme illustré par les figures 3 et 5, le dispositif de séparation 26 peut comprendre une lame de séparation 261. La lame de séparation est mobile, par rapport au robot 2, entre une position de repos et une position de coupe, ce qui définit le plan de séparation 260 du dispositif de séparation 26. La translation entre la position de repos et la position de coupe est produite par un actuateur 27 (tel qu'un moteur électrique, un vérin électrique, un actuateur hydraulique ou pneumatique) équipant le robot 2. Dans le mode de réalisation des figures 3 et 5, la lame de séparation est actionnée par une courroie 271. La courroie 271 est solidaire de la lame de séparation 261 et pilotée par une combinaison des axes 272 et/ou axes rotatifs 273, 274, la courroie étant mise en rotation par le moteur électrique 27 agissant d'actuateur et équipant le robot 2.

Le déplacement du robot 2 peut être réalisé au moyen d'une première plateforme 201 translatable parallèlement à l'axe d'empilement 40 des cassettes 3. La translation de la plateforme 201 peut s'effectuer au moyen d'un actuateur 14, tel qu'un moteur électrique, un vérin électrique, un actuateur hydraulique ou pneumatique. Dans le mode de réalisation illustré, un moteur électrique 14 (agissant d'actuateur, notamment un moteur pas-à-pas) agit sur une courroie 15 solidaire soit de la plateforme 201 soit du châssis 1, le déplacement étant guidé par une paire de glissières 12, 13 parallèles et solidaires du châssis 1.

Le déplacement du robot 2 peut être complété au moyen d'une deuxième plateforme 202 montée en translation sur la première plateforme 201 selon une direction perpendiculaire à la direction de translation de la première plateforme 201. Le déplacement relatif de cette deuxième plateforme 202 par rapport à la première plateforme 201 peut s'effectuer au moyen d'un actuateur 29 équipant le robot 2 et d'une paire de glissières 203, 204.

Le robot 2 comprend un actuateur 21 permettant, lorsque le robot 2 est accouplé à une des cassettes 3, d'actionner le mécanisme de distribution de la cassette de sorte à extraire une portion terminale 91 du carnet 9 depuis la cassette 3. L'actuateur 21 peut être un moteur électrique, un vérin électrique, un actuateur hydraulique ou pneumatique.

En particulier, comme illustré par la figure 3, l'actuateur 21 peut être un moteur électrique, notamment un moteur pas-à-pas. En particulier, cet actuateur 21 peut être configuré pour entraîner en rotation la roue dentée d'entrainement 32 de la cassette 3. La roue dentée d'entrainement 32 peut être entraînée en rotation au moyen d'une roue dentée 23 du robot 2, cette roue dentée 23 étant configurée pour entraîner en rotation la roue dentée 32 du mécanisme de distribution lorsque le robot 2 est accouplé avec la casette 3. L'accouplement de la roue dentée 23 du robot avec la roue dentée d'entrainement 32 de la cassette sélectionnée, peut s'effectuer par des déplacements de la première 201 et/ou la deuxième 202 plateforme du robot 2.

Notamment, l'accouplement des roues peux s'effectuer en:
- positionnant la roue dentée 23 du robot à proximité de la roue dentée 32 du mécanisme de distribution, notamment au moyen d'une translation de la roue dentée 23 du robot étant perpendiculaire ou inclinée à l'axe de rotation de la roue dentée 32 du mécanisme de distribution;
- alignant la roue dentée 23 du robot avec la roue dentée 32 du mécanisme de distribution, notamment par une translation de la roue dentée 23 étant parallèle ou inclinée à l'axe de rotation de la roue dentée 32 du mécanisme de distribution ;
- accouplant les roues dentées, par une translation relative de la roue dentée 32 du robot perpendiculaire à l'axe de rotation de la roue dentée 32 du mécanisme de distribution.

Dans le mode de réalisation, l'accouplement des roues peux s'effectuer en:
- positionnant verticalement la roue dentée 23 du robot au-dessus ou au-dessus la roue dentée 32 du mécanisme de distribution, par une translation de la première plateforme mobile 201 du robot;
- alignant la roue dentée 23 du robot avec la roue dentée 32 du mécanisme de distribution, par une translation de la deuxième plateforme mobile 202 du robot;
- accouplant les roues dentées, par une translation de la première plateforme mobile 201 du robot.

L'accouplement avec la cassette 3 désirée peut être supporté par la lecture d'une étiquette graphique et/ou électronique et/ou radio (RFID) positionnée sur la cassette 3 et lisible par le robot 2, notamment par un lecteur et/ou détecteur d'étiquettes, tel qu'un lecteur optique 208 et/ou un lecteur RFID 209 (cf. Figure 3).

Le robot 2 comprend en outre un dispositif de réception 24, 25, 28 configuré pour recevoir la portion terminale 91 du carnet 9 qui est extraite de la cassette 3 en actionnant son mécanisme de distribution, lorsque le robot est accouplé à la cassette.

Le mécanisme de réception du mode de réalisation illustré comprend un ou plusieurs rouleaux 24, et contre-rouleaux 25 configurés pour entraîner en déplacement la portion terminale du carnet 9 lorsqu'elle est extraite de la cassette accouplée. Le ou les rouleaux 24 sont entraînés en rotation par un actionneur 28 du robot agissant sur une courroie couplée en rotation avec l'axe axes du rouleau 24.

Comme schématiquement illustré par les figures 6a-6d, lorsque le robot est accouplé à une des cassettes 3 du module 100, le dispositif de réception 24, 25 du robot et le mécanisme de distribution 31, 38 de la cassette sont conjointement configurés pour:
positionner la portion terminale 91 du carnet 9 par rapport au dispositif de séparation 26, notamment pour séparer et/ou plier le billet 92 le long d'une ligne 910 prédéterminée; et/ou
mettre en tension la portion terminale 91 du carnet 91, notamment pour permettre la séparation du billet 92 par le dispositif de séparation 26.

Avantageusement, le module 100 peut comprendre en outre un dispositif de pliage, configuré pour opérer un pliage le long d'un plan de pliage 263.

Comme illustré par la figure 3, le dispositif de pliage peut comprendre une lame de pliage 262. La lame de pliage 262 est mobile, par rapport au robot 2, entre une position de repos et une position de pliage, ce qui définit le plan de pliage 263 du dispositif de pliage. La lame de pliage 262 peut être actionnée par un actionneur du robot 2. Dans l'exemple illustré le dispositif de séparation 26 et le dispositif de pliage sont solidaires, et actionnés par le même actionneur 27 équipant le robot 2.

Lorsque le robot est accouplé à une des cassettes 3 du module 100, le dispositif de réception 24, 25 du robot et le mécanisme de distribution 31, 38 de la cassette peuvent être conjointement configurés pour coopérer avec le dispositif de pliage 262 de sorte à plier la portion terminale 91 du carnet 9 à l'emplacement de la ligne de séparation, notamment de la ligne de prédécoupe délimitant le billet à séparer. Ce pliage permet d'affaiblir la portion terminale 91 le long de la ligne prévue de séparation (notamment des tenons), de sorte à, non seulement faciliter la séparation le long de cette ligne, mais aussi à produire une séparation avec des bords nets.

En particulier, comme illustré par les figures 6a-6d, lorsque le robot 2 est accouplé à une des cassettes 3 du module 100, le dispositif de réception 24, 25 du robot et le mécanisme de distribution 31, 38 de la cassette peuvent être conjointement configurés pour
- aligner une des lignes de prédécoupe 910 de la portion terminale 91 du carnet 9 avec la plan de pliage 263 du dispositif de pliage, notamment de la lame de pliage 262 (cf. figure 6a); et/ou
- accompagner le pliage de la portion terminale 91 du carnet 9 le long de la ligne de prédécoupe 910 par le dispositif de pliage, notamment par la lame de pliage 262 (cf. figure 6b); et/ou
- aligner une des lignes de prédécoupe 910 et/ou la ligne de pliage 911 de la portion terminale 91 du carnet 9 avec le plan de séparation 260 du dispositif de séparation 26, notamment de la lame de séparation 261 (cf. figure 6c); et/ou
- mettre en tension ladite portion terminale 91 pour permettre la séparation du billet 92 le long de la ligne de prédécoupe 910 et/ou de la ligne de pliage 911 par le dispositif de séparation 26, notamment par la lame de séparation 261 (cf. figure 6d).

Comme illustré par la figure 3, le pliage et la séparation sont effectués par un même dispositif de séparation et pliage 26, dispositif comprenant le dispositif de séparation 26 (notamment la lame de séparation 261) et le dispositif de pliage (notamment la lame pliage 262) de sorte que le plan de séparation 260 et le plan de pliage 263 sont parallèles, voir coplanaires. En particulier, ce dispositif 26 comprend une ouverture 264 dans laquelle la portion terminale 91 du carnet défile, cette ouverture étant délimitée d'une part par la lame de séparation 261, notamment en forme de V, et d'autre part par la lame de pliage 262.

Le pliage peut ainsi s'effectuer en déplaçant le dispositif de séparation et de pliage 26 dans une première direction de sorte à faire entrer en contact la lame de pliage 262 avec la portion terminale du carnet (cf. Figure 6a et 6b). La séparation du billet peut s'effectuer en déplaçant le dispositif de séparation et de pliage 26 dans une deuxième direction, qui est opposée à la première, de de sorte à faire entrer en contact la lame de séparation 261 avec la portion terminale du carnet (cf. Figure 6c et 6d).

La tension exercée conjointement par le dispositif de réception 24, 25 du robot et le mécanisme de distribution 31, 38 de la cassette pour la séparation du billet est notamment supérieure à 20 N, voire 30 N, de préférence entre 30 et 50 N.

L'accompagnement du pliage s'effectue par une opération conjointe du dispositif de réception 24, 25 du robot et du mécanisme de distribution 31, 38 de la cassette, notamment en rapprochant les extrémités de la portion terminale du carnet de manière à permettre le pliage initié par le dispositif de pliage. De préférence, le dispositif de réception 24, 25 du robot et le mécanisme de distribution 31, 38 de la cassette accompagnent le défilement de de la portion terminale du carnet sans effort, notamment en permettant une libre rotation des rouleaux d'entrainement 24, 31 du dispositif de réception et du mécanisme de distribution.

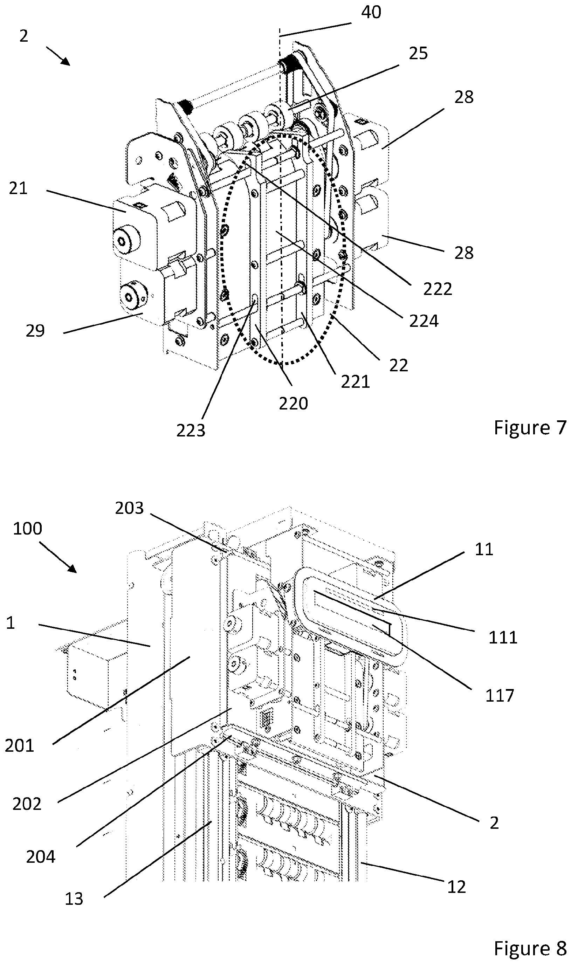

Comme illustré par les figures 7 à 9, et 11 à 12, le module 100 comprend en outre un mécanisme 22 de maintien et de transport du billet et un dispositif de distribution 11 de billets configuré pour recevoir le billet du mécanisme 22 de maintien et de transport de sorte à le distribuer à un utilisateur.

Le mécanisme 22 de maintien et de transport du billet est solidaire du robot 2 et configuré pour collecter le billet séparé du carnet 9 et le transporter vers le dispositif de distribution 11.

En particulier, le mécanisme 22 de maintien et de transport du billet peut être configuré, de manière indépendante ou en coopération avec le dispositif de réception du robot, à collecter le billet séparé en vue de son transport vers le dispositif de distribution.

Le mécanisme 22 de maintien et de transport du billet peut être configuré pour collecter le billet depuis le dispositif de réception du robot, notamment en sortie des paires de rouleaux 24, 25, et pour le déplacer dans un réceptacle ou canal s'étendant substantiellement parallèlement à l'axe d'empilement 40, ce qui oriente le billet coupé dans une direction substantiellement parallèle à l'axe d'empilement 40. Par réceptacle ou canal on entend notamment une structure ou un emplacement capable de recevoir et/ou retenir (au moins une partie du) billet.

Alternativement, comme illustré par la figure 7, le mécanisme 22 de maintien et de transport du billet peut être configuré pour coopérer avec le dispositif de réception du robot de sorte à déplacer une extrémité du billet dans le réceptacle ou canal, alors que l'autre extrémité est retenue par les rouleaux d'entrainement et les contre-rouleaux du dispositif de réception du robot.

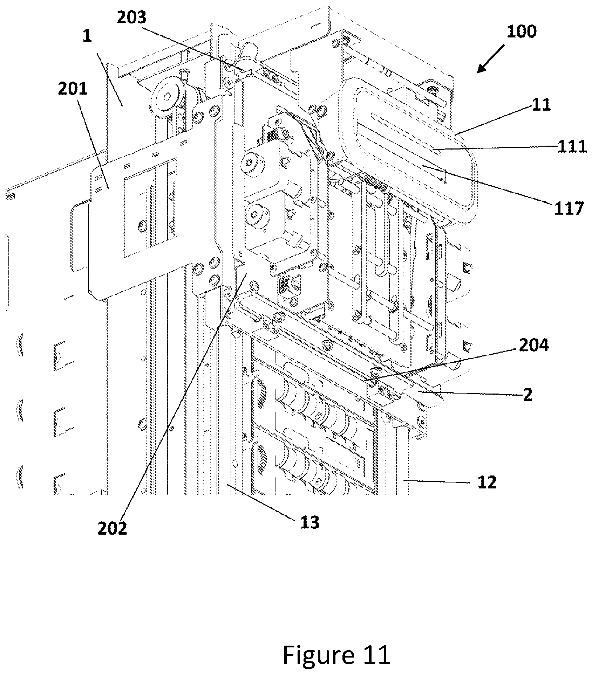

Le réceptacle ou canal peut comprendre une combinaison de guides 220, 221 guidant le billet, ou au moins une de ses extrémités, dans le réceptacle ou canal. Les guides peuvent être mobiles par rapport au robot 2, entre une position de maintien et de transport du billet et une position de distribution du billet, notamment actionnés par un actuateur et guidés par des trous oblongs 222, 223. En particulier, la position de maintien et de transport facilite la séparation du billet de son carnet et son acheminement vers la bouche de distribution 11. La position de distribution permet d'aiguiller le billet dans la bouche de distribution 11. Plus de deux guides peuvent être considérés, notamment pour permettre au réceptacle ou canal de guider des billets plus ou moins étroits. Le réceptacle ou canal peut en l'occurrence comprendre 3 guides, ou quatre (figure 11).

Le réceptacle ou canal peut être délimité par un capot 224 du robot 2.

Le mécanisme 22 de maintien et de transport du billet est ensuite configuré pour transporter, notamment translater le long de l'axe d'empilement 40, le billet dans cette orientation jusqu'à l'accouplement du robot 2 avec le dispositif de distribution 11. Une fois le robot 2 et le dispositif de distribution 11 accouplés, le mécanisme 22 de maintien et de transport du billet est configuré pour sortir le billet du réceptacle ou canal et le transmettre au dispositif de distribution 11.

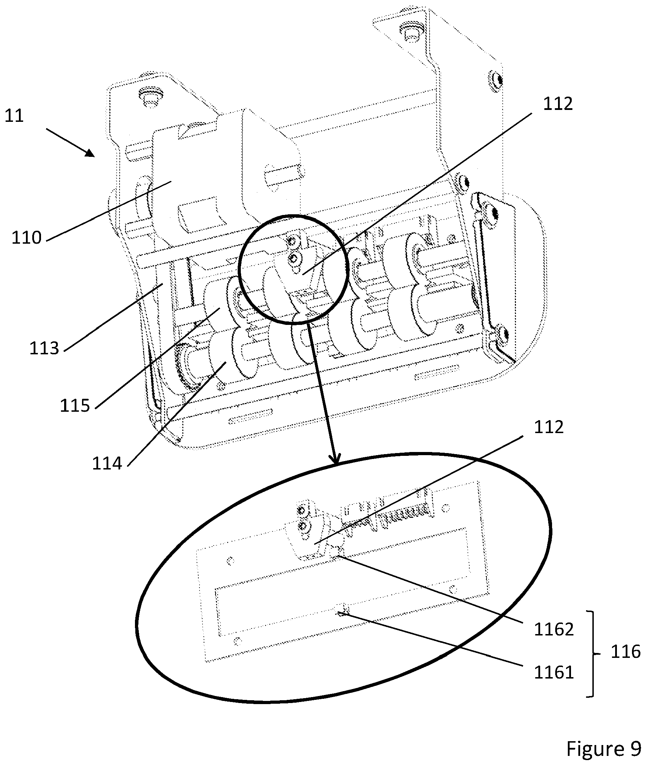

Comme illustré par les figures 8 et 9, le dispositif de distribution 11 est configuré pour délivrer le billet à un utilisateur, notamment à travers une bouche de distribution 117.

De préférence, le dispositif de distribution 11 est statique par rapport au châssis 1.

Avantageusement, le dispositif de distribution 11 comprend un ou plusieurs capteurs pour permettre un suivi des billets distribués.

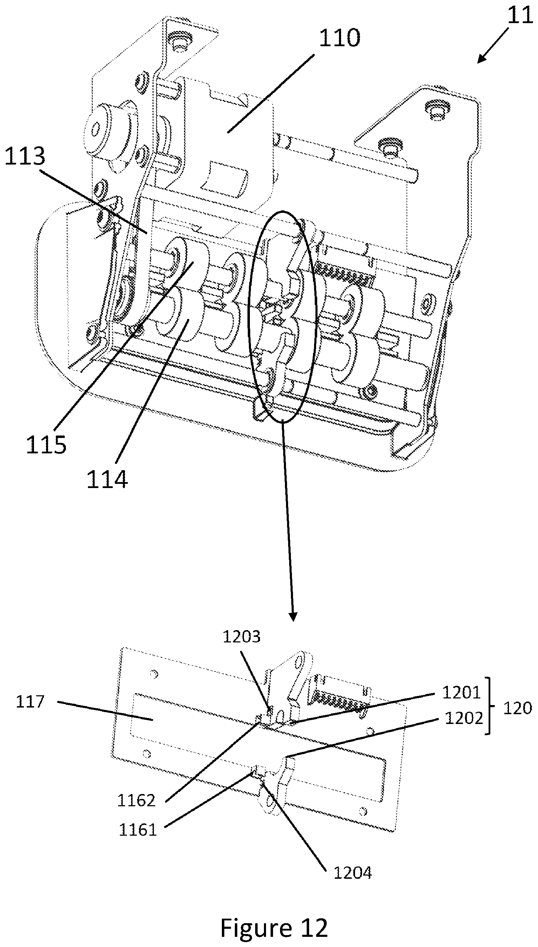

En particulier, le dispositif de distribution 11 peut comprendre un ou plusieurs capteurs de présence du billet 112, 116 permettant de vérifier la distribution (le passage) d'un billet par le dispositif de distribution 11, notamment au travers de la bouche de distribution 117 et/ou un retrait du billet par un utilisateur. Le capteur de présence du billet peut être un capteur optique 112 ou une barrière optique comprenant un émetteur 1161, et un récepteur 1162, ou une combinaison des deux (figure 9). Le capteur optique 112, de type réflectif, peut être remplacé par une barrière optique 120 comportant une surface d'émission 1201 et une surface réceptrice 1202 disposées en vis-à-vis l'une de l'autre de part et d'autre de la bouche de distribution 117 (figure 12), faisant office de guide optique. La surface d'émission 1201 peut émettre la lumière ou transmettre la lumière émise par un émetteur 1203. La surface de réception 1202 peut détecter la lumière transmise par la surface d'émission 1201 ou bien la transmettre à un récepteur 1204. D'autres dispositifs optiques peuvent être utilisés pour détecter le passage d'un billet. Dans le cas où le dispositif de distribution 11 comprend plusieurs capteurs de passage d'un billet, ils sont décalés de sorte à déterminer le sens du passage du billet. Cette disposition permet de confirmer que le billet a bien été retiré par l'utilisateur depuis l'intérieur du dispositif vers l'extérieur. La combinaison de plusieurs détecteurs permet en outre d'identifier l'éventuelle introduction d'un objet dans la bouche de distribution 117, tel qu'un billet de banque ou d'autres objets, ce qui ne correspond pas l'usage normal du dispositif. Une alerte peut être générée à l'attention de l'utilisateur et/ou émise vers un récepteur à distance à des fins de maintenance.

Alternativement ou complémentairement, le dispositif de distribution 11 peut comprendre un lecteur de billets (non illustré) configuré pour détecter une étiquette du billet 92, tel qu'un code à barres, un signe graphique, et/ou une étiquette RFID, lorsque le billet est dans une position de distribution.

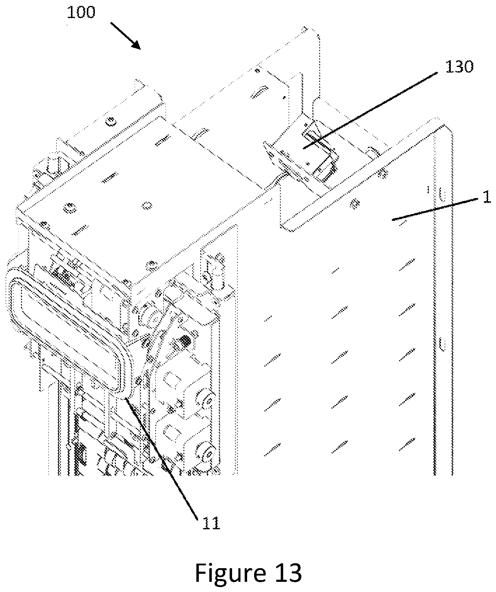

De manière optionnelle, le module 100 comporte un lecteur de codes-barres 130 disposé de sorte à lire le billet lors de son transfert depuis la cassette 3 vers le dispositif de distribution 11 (figure 13). En plus de la détection du passage du billet, le lecteur de code-barres 130 permet d'identifier le billet avant sa distribution dans la bouche de distribution 117. Le lecteur de code-barres 130 est de préférence fixé ou intégré au châssis 1 du module 100. Le lecteur de code-barres 130 peut être disposé de sorte à lire le code-barres du billet directement lors de son passage vers le dispositif de distribution 117, ou bien par l'intermédiaire d'un ou plusieurs miroirs (non représentés).

Avantageusement, le module 100 comprend en outre un système de communication pour la transmission des données fournies par les capteurs du dispositif de distribution 11, notamment du/des capteurs de présence du billet (112, 116, 120) et/ou le lecteur code-barres de billets (130) à un serveur à distance, notamment pour permettre le comptage et/ou l'activation et/ou l'enregistrement des billets lors de la distribution.

Le dispositif de distribution 11 peut comprendre un dispositif d'impression pour l'impression d'un ou plusieurs signes graphiques et/ou typographiques sur le billet en distribution, notamment en cas de billets partiellement pré-imprimés.

Le module 100 illustré par les figures 1 à 13 peut être intégré dans un appareil, notamment dans un appareil dont l'apparence et/ou les fonctionnalités sont personnalisés par un exploitant et/ou un fournisseur de billets.

Le châssis peut être ainsi configuré pour permettre une fixation de l'appareil à une surface de rétention s'étendant substantiellement à la verticale, telle qu'une surface d'une paroi ou d'un mur d'une structure ou d'un bâtiment. Par substantiellement à la vertical, on entend une direction parallèle à la direction de la pesanteur avec une tolérance de +/- 10°. De préférence, le châssis peut être configuré de sorte que, lorsque l'appareil est fixe à une paroi vertical, l'axe d'empilement 40 des cassettes résulte parallèle à la surface verticale (avec une tolérance inférieure à +/- 10°, de préférence inférieure à +/- 5°).

Alternativement ou complémentairement, l'appareil peut comprendre une base 10 solidaire au châssis 1, la base permettant le placement de l'appareil au-dessus d'une surface d'appui étendant substantiellement à horizontale, telle qu'un sol ou le carrelage d'une structure ou d'un bâtiment. Par substantiellement à l'horizontale, on entend une direction perpendiculaire à la direction de la pesanteur avec une tolérance de +/- 10°. De préférence, la base peut être configurée de sorte que, lorsque l'appareil est placé au-dessus d'une surface d'appui, l'axe d'empilement 40 des cassettes résulte perpendiculaire à la surface verticale (avec une tolérance inférieure à +/- 5°).

L'appareil peut être une machine de vente, notamment en libre-service, comprenant un dispositif d'alimentation pour alimenter électriquement le module 100 et une interface utilisateur permettant la sélection et/ou le payement d'un ou de plusieurs billets.

Alternativement, l'appareil peut être relié à et/ou alimenté par un dispositif de contrôle (tel qu'une caisse enregistreuse, ou une borne de paiement) de sorte à permettre à ce dispositif de contrôler la distribution de billets. Alternativement ou complémentairement, le système de communication du module peut être configuré pour transmettre les données fourni par les capteurs du dispositif de distribution à ce dispositif de contrôle.

### Numéros de référence employés sur les figures

- 100: Module de distribution
- 1: Châssis
- 10: Base
- 11: Dispositif de distribution
- 110: Actuateur de distribution
- 111: Indicateur visuelle de distribution
- 112: Capteur de présence du billet
- 113: Couroi
- 114: Rouleau (inférieur) de distribution
- 115: Rouleau (supérieur) de distribution
- 116: Capteur de présence du billet
- 1161: Emetteur
- 1162: Récepteur
- 117: Bouche de distribution
- 120: Barrière optique
- 1201: Surface d'émission
- 1202: Surface de réception
- 1203: Emetteur
- 1204: Récepteur
- 130: Lecteur code-barres
- 12: Glissière
- 13: Glissière
- 14: Actuateur
- 15: Couroi
- 2: Robot
- 20: Support mobile
- 201: Plateforme mobile
- 202: Plateforme mobile
- 203: Glissière
- 204: Glissière
- 208: Lecteur optique
- 209: Lecteur RFID
- 21: Actuateur de pliage et/ou séparation
- 22: Mécanisme de retient et de transport du billet
- 220,221: Guide
- 222-223: Trou oblong
- 224: Capot
- 23: Roue dentée
- 24: Rouleau d'entrainement des billets
- 25: Contre-rouleau
- 26: Dispositif de séparation et de pliage
- 260: Plan de coupe
- 261: Lame de séparation
- 262: Lame de pliage
- 263: Plan de pliage
- 264: Ouverture
- 27: Actuateur
- 271: Courroie
- 272: Tige
- 273: Axe
- 28: Actuateur complémentaire d'entrainement des billets
- 281: Couroi
- 29: Actuateur de déplacement
- 3: Cassette
- 301: Hauteur
- 302: Bord inférieur
- 303: Bord supérieur
- 304: Position d'extraction du carnet
- 305: Hauteur
- 306: Base
- 307: Position de la surface rehaussant
- 308: Rehaussement
- 31: Rouleau d'entrainement
- 32: Roue dentée d'entrainement
- 33: Guide de réglage largeur du carnet billets
- 34: Guide de réglage longueur du carnet billets
- 35: Logement
- 36: Couvercle
- 38: Contre-rouleau
- 39: Rehausseur
- 40: Axe d'empilement
- 9: Carnet de billets
- 91: portion terminale
- 910: Ligne de prédécoupe
- 911: Ligne de pliage
- 92: Billet

## Revendications

1. Module (100) pour distribuer des billets d'un carnet (9) de billets prédécoupés, le dispositif comprenant:
- un châssis (1) configuré pour retenir une pluralité de cassettes (3), chaque cassette (3) comprenant un logement (35) pour loger un carnet (9) de billets, préférablement les cassettes de ladite pluralité de cassettes étant superposées l'une à l'autre le long d'un axe d'empilement (40),
- un robot (2) mobile par rapport audit châssis (1)
**caractérisé en ce que** le robot mobile est configuré pour s'accoupler sélectivement avec l'une de ladite pluralité de cassettes (3) ; le robot comprenant :
- un actuateur (21) configuré, lorsque le robot est accouplé à une des cassettes (3), pour actionner un mécanisme de distribution de la cassette (31, 32, 38) de sorte à extraire une portion terminale (91) du carnet (9) depuis la cassette accouplée ;
- un dispositif de réception (24, 25, 28) configuré pour recevoir ladite portion terminale (91) du carnet; et
- un dispositif de séparation (26) configuré pour opérer une séparation le long d'un plan de séparation (260) ;
dans lequel le dispositif de réception (24, 25, 28) et le mécanisme de distribution (31, 32, 38) sont conjointement configurés pour:
aligner une ligne de séparation (910) de la portion terminale (91) du carnet (9) avec le plan de séparation (260) du dispositif de séparation (26); et/ou
mettre en tension ladite portion terminale (91) pour permettre la séparation du billet (92) par le dispositif de séparation (26).

2. Module selon la revendication 1, comprenant en outre un dispositif de pliage (262) configuré pour opérer un pliage le long d'un plan de pliage (263); ledit dispositif de pliage (262), ledit dispositif de réception (24, 25, 28) et ledit mécanisme de distribution (31, 32, 33) étant configurés pour plier ladite portion terminale (91) en correspondance de ladite ligne de séparation (910).

3. Module selon la revendication 2, ledit dispositif de séparation (26) comprenant une lame de séparation (261) mobile entre une position de repos et une position de coupe ; et/ou ledit dispositif de pliage (262) comprenant une lame de pliage (262) mobile entre une position de repos et une position de pliage; de préférence la lame de séparation et la lame de plage (262) étant solidaires.

4. Module selon l'une des revendications 1 à 3, comprenant en outre un dispositif de distribution (11) configuré pour distribuer le billet (92) à un utilisateur; préférablement ledit dispositif de distribution (11) étant statique par rapport au châssis (1) ; ledit robot (2) comprenant un mécanisme (22) de maintien et de transport du billet configuré pour: orienter au moins une portion du billet coupé dans une direction substantiellement parallèle audit axe d'empilement (40); et transporter le billet au dispositif de distribution.

5. Module selon la revendication 4, ledit dispositif de distribution (11) comprenant un ou plusieurs capteurs (112, 116, 120) de billets configurés pour détecter le passage du billet (92) par le dispositif de distribution.

6. Module selon la revendication 4 ou 5, **caractérisé en ce que** ledit mécanisme (22) de maintien et de transport du billet comporte un réceptacle pourvu de guides 220, 221, pouvant être mobiles par rapport au robot (2).

7. Module selon l'une des revendications 1 à 6, **caractérisé en ce qu'**il comporte en outre un lecteur code-barres (130) permettant d'identifier un billet avant son passage dans le dispositif de distribution (11), préférablement le module (100) comprenant en outre un système de communication pour la transmission de données fournies par le lecteur code-barres (130) à un serveur à distance.

8. Module selon l'une des revendications 1 à 7, ledit robot étant translatable le long dudit axe d'empilement (40).

9. Module selon l'une des revendications 1 à 8, la cassette (3) comprenant un rehausseur (39) configuré pour surélever un coté du carnet de billets lorsqu'il est logé dans ledit logement.

10. Module selon l'une des revendications 1 à 9, **caractérisé en ce que** l'une ou plusieurs de la pluralité de cassettes (3) comporte au moins un guide de réglage (33) délimitant la largeur du logement de la cassette ou un deuxième guide (34) délimitant la longueur du logement de la cassette ou la combinaison d'au moins un guide de réglage (33) et d'un deuxième guide (34).

11. Module selon l'une des revendications 2 à 10, le robot mobile comprenant ledit dispositif de pliage.

12. Module selon l'une des revendications 1 à 11 ladite ligne de séparation (910) étant l'une des lignes de prédécoupe (910) du carnet (9).

13. Appareil pour distribuer des billets, **caractérisé en ce qu'**il comprend : un module (100) selon l'une des revendications 1 à 12, et de préférence un dispositif d'alimentation pour alimenter électriquement ledit module (100).

14. Appareil selon la revendication 13 l'appareil comprenant une base 10 solidaire du châssis (1) du module (100), la base permettant le placement de l'appareil au-dessus d'une surface d'appui s'étendant substantiellement à horizontale; et/ou l'appareil et/ou le châssis étant configuré pour permettre une fixation de l'appareil à une surface de rétention s'étendant substantiellement à la verticale; de préférence, lorsque l'appareil est placé au-dessus de ladite surface d'appui et/ou fixé à la dite surface de rétention, l'axe d'empilement (40) est parallèle à la direction de la pesanteur.

15. Méthode de distribution d'un billet (92) par un module ou appareil de distribution comprenant un châssis (1) configuré pour retenir une pluralité de cassettes (3), chaque cassette (3) comprenant un logement (35) pour loger un carnet (9) de billets prédécoupés, un robot (2) mobile par rapport audit châssis (1) et un dispositif de séparation (26); la méthode étant **caractérisé en ce qu'**elle comprend les étapes de:
- coupler sélectivement le robot (2) avec l'une des cassettes (3) dudit module ou appareil (100) de distribution;
- actionner, par moyen d'un actuateur (21) du robot (2), un mécanisme de distribution de la cassette (31, 32, 38) de sorte à extraire une portion terminale (91) du carnet (9) depuis la cassette accouplée;
- réceptionner ladite portion terminale (91) du carnet par un dispositif de réception (24, 25, 28) du robot (2); et
- séparer le billet (92) depuis la portion terminale (91) par le dispositif de séparation (26);
dans laquelle l'étape de séparation du billet comprend:
un alignement d'une ligne de séparation (910) de la portion terminale (91) du carnet (9) avec le dispositif de séparation (26) effectuée conjointement par le dispositif de réception (24, 25, 28) et le mécanisme de distribution (31, 32, 38); et/ou
une mise en tension de ladite portion terminale (91) du carnet effectuée conjointement par le dispositif de réception (24, 25, 28) et le mécanisme de distribution (31, 32, 38).

16. Méthode selon la revendication 15, ladite étape de séparation du billet (92) comprenant une étape de:
pliage de ladite portion terminale (91) du carnet en correspondance de ladite ligne de de séparation (910).

17. Méthode selon la revendication 15 ou 16, ladite ligne de séparation (910) étant l'une des lignes de prédécoupe (910) du carnet (9).

## Patentansprüche

1. Modul (100) zum Ausgeben von Banknoten aus einem Heft (9) mit vorgestanzten Banknoten, wobei die Vorrichtung umfasst:
- ein Gestell (1), derart ausgebildet, dass es eine Vielzahl von Kassetten (3) hält, wobei jede Kassette (3) ein Gehäuse (35) zur Aufnahme eines Heftes (9) mit Banknoten umfasst, wobei vorzugsweise die Kassetten der Vielzahl von Kassetten entlang einer Stapelachse (40) übereinander gestapelt sind,
- einen relativ zu dem Rahmen (1) beweglichen Roboter (2),
**dadurch gekennzeichnet, dass** der bewegliche Roboter so ausgebildet ist, dass er selektiv mit einer der Vielzahl von Kassetten (3) zusammenwirkt; wobei der Roboter umfasst:
- einen Aktuator (21), derart ausgebildet, dass er, wenn der Roboter an eine der Kassetten (3) angekoppelt ist, einen Kassettenausgabemechanismus (31, 32, 38) betätigt, um einen Endabschnitt (91) des Hefts (9) aus der angekoppelten Kassette zu entnehmen;
- eine Aufnahmevorrichtung (24, 25, 28), derart ausgebildet, dass sie den Endabschnitt (91) des Hefts aufnimmt; und
- eine Trennvorrichtung (26), die so ausgebildet ist, dass sie eine Trennung entlang einer Trennebene (260) durchführt; wobei die Aufnahmevorrichtung (24, 25, 28) und der Ausgabemechanismus (31, 32, 38) übereinstimmend ausgebildet sind, um:
Ausrichten einer Trennlinie (910) des Endabschnitts (91) des Hefts (9) mit der Trennebene (260) der Trennvorrichtung (26); und/oder
Spannen des Endabschnitts (91), um die Trennung der Banknote (92) durch die Trennvorrichtung (26) zu ermöglichen.

2. Modul nach Anspruch 1, ferner umfassend eine Faltvorrichtung (262), derart ausgebildet, dass sie entlang einer Faltebene (263) faltet; wobei die Faltvorrichtung (262), die Aufnahmevorrichtung (24, 25, 28) und der Ausgabemechanismus (31, 32, 33) so konfiguriert sind, dass sie den Endabschnitt (91) in Übereinstimmung mit der Trennlinie (910) falten.

3. Modul nach Anspruch 2, wobei die Trennvorrichtung (26) eine Trennklinge (261) umfasst, die zwischen einer Ruheposition und einer Schneidposition beweglich ist; und/oder die Faltvorrichtung (262) eine Faltklinge (262) umfasst, die zwischen einer Ruheposition und einer Faltposition beweglich ist; wobei vorzugsweise die Trennklinge und die Faltklinge (262) einstückig sind.

4. Modul nach einem der Ansprüche 1 bis 3, das außerdem eine Ausgabevorrichtung (11) umfasst, die so konfiguriert ist, dass sie die Banknote (92) an einen Benutzer ausgibt; vorzugsweise ist die Ausgabevorrichtung (11) in Bezug auf den Rahmen (1) statisch; wobei der Roboter (2) einen Mechanismus (22) zum Halten und Transportieren der Banknote umfasst, der so konfiguriert ist, dass er: mindestens einen Teil der abgeschnittenen Banknote in einer Richtung im Wesentlichen parallel zur Stapelachse (40) ausrichtet; und die Banknote zur Ausgabevorrichtung transportiert.

5. Modul nach Anspruch 4, wobei die Ausgabevorrichtung (11) einen oder mehrere Banknotensensoren (112, 116, 120) umfasst, die so konfiguriert sind, dass sie den Durchgang der Banknote (92) durch die Ausgabevorrichtung erfassen.

6. Modul nach Anspruch 4 oder 5, **dadurch gekennzeichnet, dass** der Mechanismus (22) zum Halten und Transportieren der Banknote einen Behälter umfasst, der mit Führungen 220, 221 versehen ist, die in Bezug auf den Roboter (2) beweglich sein können.

7. Modul nach einem der Ansprüche 1 bis 6, **dadurch gekennzeichnet, dass** es zusätzlich einen Strichcodeleser (130) aufweist, mit dem eine Banknote vor ihrem Durchlauf durch die Ausgabevorrichtung (11) identifiziert werden kann, wobei das Modul (100) vorzugsweise zusätzlich ein Kommunikationssystem zur Übertragung von Daten, die vom Strichcodeleser (130) geliefert werden, an einen entfernten Server aufweist.

8. Modul nach einem der Ansprüche 1 bis 7, wobei der Roboter entlang der Stapelachse (40) bewegbar ist.

9. Modul nach einem der Ansprüche 1 bis 8, wobei die Kassette (3) einen Aufsatz (39) umfasst, der so gestaltet ist, dass er eine Seite des Geldscheinhefts erhöht, wenn es in der Aufnahme untergebracht ist.

10. Modul nach einem der Ansprüche 1 bis 9, **dadurch gekennzeichnet, dass** eine oder mehrere der Vielzahl von Kassetten (3) mindestens eine Einstellführung (33), die die Breite der Kassettenaufnahme begrenzt, oder eine zweite Führung (34), die die Länge der Kassettenaufnahme begrenzt, oder eine Kombination aus mindestens einer Einstellführung (33) und einer zweiten Führung (34) aufweist.

11. Modul nach einem der Ansprüche 2 bis 10, wobei der bewegliche Roboter eine Vorrichtung zum Falten umfasst.

12. Modul nach einem der Ansprüche 1 bis 11, wobei die Trennlinie (910) eine der Vorschneidelinien (910) des Hefts (9) ist.

13. Vorrichtung zum Ausgeben von Banknoten, **dadurch gekennzeichnet, dass** sie Folgendes umfasst: ein Modul (100) nach einem der Ansprüche 1 bis 12, und vorzugsweise eine Stromversorgungseinrichtung zum elektrischen Versorgen des Moduls (100).

14. Vorrichtung nach Anspruch 13, wobei die Vorrichtung eine Basis (10) umfasst, die fest mit dem Rahmen (1) des Moduls (100) verbunden ist, wobei die Basis die Platzierung der Vorrichtung über einer sich im Wesentlichen horizontal erstreckenden Auflagefläche ermöglicht; Vorzugsweise ist die Stapelachse (40) parallel zur Richtung der Schwerkraft, wenn die Vorrichtung über der Auflagefläche platziert und/oder an der Auflagefläche befestigt ist.

15. Verfahren zum Ausgeben einer Banknote (92) durch ein Ausgabemodul oder -gerät, das einen Rahmen (1) umfasst, der so konfiguriert ist, dass er eine Vielzahl von Kassetten (3) hält, wobei jede Kassette (3) ein Gehäuse (35) zum Aufnehmen eines Heftes (9) mit vorgestanzten Banknoten umfasst, einen Roboter (2), der in Bezug auf den Rahmen (1) beweglich ist, und eine Trennvorrichtung (26); wobei das Verfahren **dadurch gekennzeichnet ist, dass** es die folgenden Schritte umfasst:
- den Roboter (2) selektiv mit einer der Kassetten (3) des genannten Abgabemoduls oder -geräts (100) zu koppeln;
- durch einen Aktuator (21) des Roboters (2) einen Kassettenausgabemechanismus (31, 32, 38) betätigen, um einen Endabschnitt (91) des Hefts (9) aus der angekoppelten Kassette zu entnehmen;
- Aufnehmen des Endabschnitts (91) des Hefts durch eine Aufnahmevorrichtung (24, 25, 28) des Roboters (2); und
- Trennen der Banknote (92) von dem Endabschnitt (91) durch die Trennvorrichtung (26);
wobei der Schritt des Trennens der Banknote umfasst: das Ausrichten einer Trennlinie (910) des Endabschnitts (91) des Hefts (9) mit der Trennvorrichtung (26), die von der Aufnahmevorrichtung (24, 25, 28) und dem Ausgabemechanismus (31, 32, 38) gemeinsam durchgeführt wird; und/oder
ein Spannen des genannten Endabschnitts (91) des Hefts, das gemeinsam von der Aufnahmevorrichtung (24, 25, 28) und dem Ausgabemechanismus (31, 32, 38) durchgeführt wird.

16. Verfahren nach Anspruch 15, wobei der Schritt des Trennens der Banknote (92) einen Schritt des: Falten des Endabschnitts (91) des Hefts entlang der Trennlinie (910) umfasst.

17. Verfahren nach Anspruch 15 oder 16, wobei die Trennlinie (910) eine der Vorschneidelinien (910) des Hefts (9) ist.

## Claims

1. Module (100) for dispensing tickets from a booklet (9) of pre-cut tickets, the device comprising:
- a frame (1) configured to retain a plurality of cassettes (3), each cassette (3) comprising a housing (35) for housing a booklet (9) of tickets, preferably the cassettes of said plurality of cassettes being superimposed on each other along a stacking axis (40),
- a robot (2) movable with respect to said frame (1)
**characterized in that** the mobile robot is configured to selectively couple with one of said plurality of cassettes (3); the robot comprising:
- an actuator (21) configured, when the robot is coupled to one of the cassettes (3), to actuate a cassette dispensing mechanism (31, 32, 38) so as to extract an end portion (91) of the booklet (9) from the coupled cassette;
- a receiving device (24, 25, 28) configured to receive said terminal portion (91) of the booklet; and
- a separating device (26) configured to operate a separation along a separation plane (260);
wherein the receiving device (24, 25, 28) and the dispensing mechanism (31, 32, 38) are jointly configured to:
align a separation line (910) of the end portion (91) of the booklet (9) with the separation plane (260) of the separation device (26); and/or
tensioning said end portion (91) to allow separation of the ticket (92) by the separation device (26).

2. Module according to claim 1, further comprising a folding device (262) configured to operate a folding along a folding plane (263); said folding device (262), said receiving device (24, 25, 28) and said dispensing mechanism (31, 32, 33) being configured to fold said end portion (91) in correspondence with said separation line (910).

3. Module of claim 2, said separating device (26) comprising a separating blade (261) movable between a rest position and a cutting position; and/or said folding device (262) comprising a folding blade (262) movable between a rest position and a folding position; preferably the separating blade and the folding blade (262) being integral.

4. Module according to any one of claims 1 to 3, further comprising a dispensing device (11) configured to dispense the ticket (92) to a user; preferably said dispensing device (11) being static with respect to the frame (1); said robot (2) comprising a ticket holding and transporting mechanism (22) configured to orient at least a portion of the cut ticket in a direction substantially parallel to said stacking axis (40); and transport the ticket toward the dispensing device.

5. Module of claim 4, said dispensing device (11) comprising one or more ticket sensors (112, 116, 120) configured to detect the passage of the ticket (92) through the dispensing device.

6. Module according to claim 4 or 5, **characterized in that** said ticket holding and transporting mechanism (22) comprises a receptacle provided with guides (220, 221), which can be mobile with respect to the robot (2).

7. Module according to any of claims 1 to 6, **characterized in that** it further comprises a barcode reader (130) for identifying a ticket before it passes through the dispensing device (11), preferably the module (100) further comprising a communication system for transmitting data provided by the barcode reader (130) to a remote server.

8. Module according to any of claims 1 to 7, said robot being translatable along said stacking axis (40).

9. Module according to one of claims 1 to 8, the cassette (3) comprising an over thickness (39) configured to raise a side of the booklet of tickets when it is arranged in said housing.

10. Module according to any of claims 1 to 9, **characterized in that** one or several of the plurality of cassettes (3) comprises at least one adjustment guide (33) delimiting the width of the cassette housing or a second guide (34) delimiting the length of the cassette housing or the combination of at least one adjustment guide (33) and a second guide (34).

11. Module of any of claims 2 to 10, the mobile robot comprising said folding device.

12. Module according to any one of claims 1 to 11, said separation line (910) being one of the pre-cut lines (910) of the booklet (9).

13. Apparatus for dispensing tickets, **characterized in that** it comprises a module (100) according to one of claims 1 to 12, and preferably a power device for electrically powering said module (100).

14. Apparatus according to claim 13, the apparatus comprising a base (10) integral with the frame (1) of the module (100), the base allowing placement of the apparatus above a support surface extending substantially horizontally; and/or the apparatus and/or the frame being configured to allow attachment of the apparatus to a retention surface extending substantially vertically; preferably, when the apparatus is placed above said support surface and/or attached to said retention surface, the stacking axis (40) is parallel to the direction of gravity.

15. Method of dispensing a ticket (92) by a dispensing module or apparatus comprising a frame (1) configured to retain a plurality of cassettes (3), each cassette (3) comprising a housing (35) for housing a booklet (9) of precut tickets, a robot (2) movable relative to said frame (1) and a separating device (26); the method being **characterized in that** it comprises the steps of:
- selectively coupling the robot (2) with one of the cassettes (3) of said distribution module or apparatus (100);
- actuating, by means of an actuator (21) of the robot (2), a cassette dispensing mechanism (31, 32, 38) so as to extract an end portion (91) of the booklet (9) from the coupled cassette;
- receiving said end portion (91) of the booklet by a receiving device (24, 25, 28) of the robot (2); and
- separating the ticket (92) from the end portion (91) by the separating device (26);
wherein the step of separating the ticket comprises:
- an alignment of a separation line (910) of the end portion (91) of the booklet (9) with the separation device (26) performed jointly by the receiving device (24, 25, 28) and the dispensing mechanism (31, 32, 38); and/or
- a tensioning of said end portion (91) of the booklet performed jointly by the receiving device (24, 25, 28) and the distribution mechanism (31, 32, 38).

16. Method according to claim 15, said ticket separation step (92) comprising a step of folding said end portion (91) of the notebook in correspondence of said separation line (910).

17. Method according to claim 15 or 16, said separation line (910) being one of the pre-cut lines (910) of the booklet (9).
